# EUROPÄISCHE PATENTSCHRIFT

(11) **EP 1 391 357 B1**
(45) Veröffentlichungstag und Bekanntmachung des Hinweises auf die Patenterteilung: **13.12.2006**
(21) Anmeldenummer: 03090214.2
(22) Anmeldetag: 15.07.2003
(51) Int. Cl.: B60R 22/41, B60R 22/38, B60R 22/405

(54) **Gurtvorrichtung**
Seat belt device
Dispositif de ceinture de sécurité

(30) Priorität: 07.08.2002 DE 10236858
(43) Veröffentlichungstag der Anmeldung: 25.02.2004
(73) Patentinhaber: TAKATA-PETRI (Ulm) GmbH, 89081 Ulm (DE)
(72) Erfinder: Grasser, Thomas, 89186 Illerrieden (DE); Fleischmann, Robert, 89233 Neu-Ulm (DE); Lambrecht, Stefan, 89275 Unterelchingen (DE); Benz, Jochen, 89567 Sontheim (DE)
(74) Vertreter: Fischer, Uwe

(56) Entgegenhaltungen:
- EP-A- 1 172 266
- EP-A- 1 177 954
- DE-A- 2 722 744

## Beschreibung

Die Erfindung bezieht sich auf eine Gurtvorrichtung.

Bekannte Gurtvorrichtungen weisen Gurtsperren auf, mit deren Hilfe der Gurt bei einem ruckartigen Abrollen verrastet wird. Solche Gurtsperren weisen ein Sperrelement auf, dass bei einem ruckartigen Abrollen des Gurtes mit dem Rahmen der Gurtvorrichtung verrastet.

Bei solchen Gurtvorrichtungen ist jedoch ein unkontrolliertes Einsteuern des Sperrelementes in den Rahmen der Gurtvorrichtung auch bei schnellem Gurtbandrücklauf, d.h. beim schnellen Aufrollen des Gurtes, festgestellt worden.

Weiterhin bestehen solche Gurtvorrichtungen aus vielen Einzelteilen, so dass sie aufwändig und teuer in der Konstruktion und Herstellung sind.

Ein weiterer Nachteil ist, dass solche bekannten Gurtvorrichtungen ein schlechtes Ansprechverhalten aufweisen können, d.h. die Einsteuerwege und -zeiten bis zu einer Verriegelung der Gurtspindel sind lang.

Außerdem weisen die Gurtvorrichtungen oft eine hohe Geräuschentwicklung auf.

Die gattungsbildende DE-A- 27 22 744 offenbart eine Gurtvorrichtung für ein Fahrzeug mit den Merkmalen gemäß dem Oberbegriff des Anspruchs 1. Bei dieser Gurtvorrichtung ist eine Führungskulisse für einen an einem Sperrelement angebrachten Führungsstift vorhanden. Die Führungskulisse gehört zu einem Trägheitskörper, der im Falle eines abrupten Gurtbandauszugs relativ zu dem Sperrelement verdreht wird, wodurch die Führungskulisse den Führungsstift und damit das Sperrelement in eine Sperrposition überführt, in der die Gurtrolle gegenüber einem Gurtrahmen der Gurtvorrichtung blockiert ist.

Die europäische Offenlegungsschrift EP 1 177 954 offenbart eine Gurtvorrichtung, bei der die Rückhaltekraft trotz eines reduzierten Gewichts dennoch beibehalten wird. Die Gurtvorrichtung enthält eine Führungskulisse, die das Blockieren der Gurtvorrichtung beim Abrollen des Gurtbandes steuert.

Die europäische Offenlegungsschrift EP 1 172 266 offenbart eine Gurtvorrichtung, bei der das Abwickeln des Sicherheitsgurtes von der Gurtrolle und das Verrasten der Gurtvorrichtung mittels eines Steuerpins gesteuert wird, der in einer Steuerkulisse geführt wird. Die Steuerkulisse und der Steuerpin ermöglichen, dass nach einem Einrasten der Gurtvorrichtung ein erneutes Ausziehen des Sicherheitsgurtes möglich ist, ohne dass es zu einem erneuten Einrasten kommt.

Die vorliegende Erfindung hat zur Aufgabe, sich dieser Problematik anzunehmen. Diese Aufgabe wird durch die im unabhängigen Anspruch 1 angegebene Erfindung gelöst. Vorteilhafte Ausgestaltungen der Erfindung sind den Unteransprüchen zu entnehmen.

Erfindungsgemäss ist eine Gurtvorrichtung für ein Fahrzeug geschaffen, mit: einem Sicherheitsgurt; einer am Fahrzeugchassis drehbar befestigten Gurtrolle zum Auf- und Abrollen des Sicherheitsgurtes; einer ersten Sperrvorrichtung zur Verriegelung der Gurtrolle gegenüber einem Gurtrahmen; und einem an die Sperrvorrichtung gekoppelten Führungsstift, der innerhalb einer Führungskulisse zwischen einer ersten und einer zweiten Position beweglich geführt ist, wobei in der ersten Position die Gurtrolle gegenüber dem Gurtrahmen verriegelt ist, und in der zweiten Position eine Verriegelung der Gurtrolle gegenüber dem Gurtrahmen verhindert ist.

Mittels des Führungsstiftes kann erreicht werden, dass die Gurtrolle nur bei einem ruckartigen Abrollen des Gurtes, nicht aber bei einem ruckartigen Aufrollen blockiert.

Insbesondere wird der Führungsstift abhängig von der Drehrichtung der Gurtrolle in die erste oder die zweite Position bewegt. Damit kann bereits mittels der Drehrichtung ein ungewolltes Blockieren der Gurtrolle verhindert werden. Insbesondere wird dabei der Führungsstift bei Abrollen des Gurtes in die erste und bei Aufrollen des Gurtes in die zweite Position bewegt.

Vorzugsweise wird eine Überführung des Führungsstiftes in die zweite Position durch die bei der Drehung der Gurtrolle entstehenden Trägheitsmomente der ersten Sperrvorrichtung bewirkt. In dieser Ausgestaltung werden folglich die bei Drehung der Gurtrolle wirkenden Kräfte genutzt, um eine Bewegung des Führungsstiftes in die zweite Position zu bewirken.

Die Führungskulisse kann einen Totgang aufweisen, in welchem der Führungsstift besagte zweite Position einnimmt. Bei Einnahme diese Position wird eine Zustandsänderung der ersten Sperrvorrichtung generell verhindert.

Die Führungskulisse kann senkrecht zur Drehachse der Gurtrolle verlaufen. Durch eine Anordnung der Führungskulisse senkrecht zur Drehachse können die bei der Drehung der Gurtrolle entstehenden Zentrifugalkräfte optimal zur Überführung des Führungsstiftes in die zweite Position ausgenutzt werden.

Insbesondere kann die Führungskulisse aus einem längeren und einem dazu im wesentlichen senkrechten kürzeren Kulissenabschnitt bestehen, wobei die erste Position sich am der Verbindungsstelle der beiden Abschnitte entgegengesetzten Ende des längeren Abschnittes, und die zweite Position sich am der Verbindungsstelle der beiden Abschnitte entgegengesetzten Ende des kürzeren Abschnittes befindet. Der längere Kulissenabschnitt dient somit zur Überführung des Führungsstiftes in die erste Position und damit zur Verriegelung der Gurtrolle. Der kürzere Kulissenabschnitt dient zur Überführung des Führungsstiftes in die zweite Position, in der eine Verriegelung der Gurtrolle verhindert wird. Die dazu nötigen Kräfte entstehen in beiden Fällen durch Drehung der Gurtrolle. Durch einen senkrechten Verlauf der Abschnitte relativ zueinander werden die zur Bewegung entlang des jeweiligen Kulissenabschnittes benötigten Kräfte optimal voneinander entkoppelt.

Vorzugsweise weist die Gurtvorrichtung weiterhin ein Federelement auf, das die erste Sperrvorrichtung und den angekoppelten Führungsstift in einer Ruheposition hält. Dadurch wird sichergestellt, dass der Führungsstift nach Stillstand der Gurtrolle nicht an einem der Enden der Kulissenabschnitte verharrt, sondern unverzüglich in die Ruhestellung im Bereich der Verbindungsstelle der beiden Kulissenabschnitte zurückkehrt. Dies gewährleistet eine zuverlässige Funktion auch bei wiederholtem ruckartigen Auf- oder Abrollen des Gurtes in kurzen Abständen.

Das Federelement kann durch eine Spiralfeder oder eine Bügelfeder gebildet sein.

Die erste Sperrvorrichtung kann eine Sperrklinke aufweisen, die zur Verriegelung der Gurtrolle mit einem Rahmen der Gurtvorrichtung verrastbar ist.

Außerdem kann die Gurtrolle folgende zusätzliche Merkmale aufweisen: einen mit der Gurtrolle und der ersten Sperrvorrichtung verbundenen Flansch; ein drehbar am Fahrzeugchassis befestigten Sperrrad; und eine mit dem Sperrrad gekoppelten zweiten Sperrvorrichtung zur Verriegelung des Sperrrades bei einem ruckartigen Abrollen des Sicherheitsgurtes; wobei die Führungskulisse in dem Sperrrad vorgesehen ist, und der Führungsstift bei Verriegelung des Sperrrades durch weitere Drehung des Flansches und der ersten Sperrvorrichtung entlang der Führungskulisse in Richtung der ersten Position bewegt wird, wodurch eine Verriegelung der Gurtrolle durch die erste Sperrvorrichtung ausgelöst wird, und wobei der Führungsstift durch ruckartiges Aufrollen des Sicherheitsgurtes in Richtung der zweiten Position bewegt wird, wodurch eine Verriegelung der Gurtrolle durch die erste Sperrvorrichtung verhindert wird.

Die zweite Sperrvorrichtung kann durch eine Sperrklinke gebildet sein, die bei Überschreiten einer vorbestimmten Winkelbeschleunigung der Gurtrolle in Gurtabrollrichtung in eine Verzahnung eines Radkranzes eingreift, wodurch das Sperrrad gegenüber der Gurtrolle verriegelt wird, und bei weiterer Rotation der Gurtrolle gegenüber dem Sperrrad der Führungsstift innerhalb der Führungskulisse in die erste Position bewegt wird.

Die Erfindung wird nun anhand von Ausführungsbeispielen in Bezug auf die Zeichnungen erklärt, und es zeigen:
Figur 1 schematisch den Querschnitt eines Teiles einer Gurtvorrichtung;
Figur 2 schematisch die Einzelteile des in Figur 1 gezeigten Teiles in perspektivischer Ansicht;
Figur 3 schematisch eine perspektivische Ansicht weiterer Teile einer Gurtvorrichtung nach einer Ausgestaltung der Erfindung;

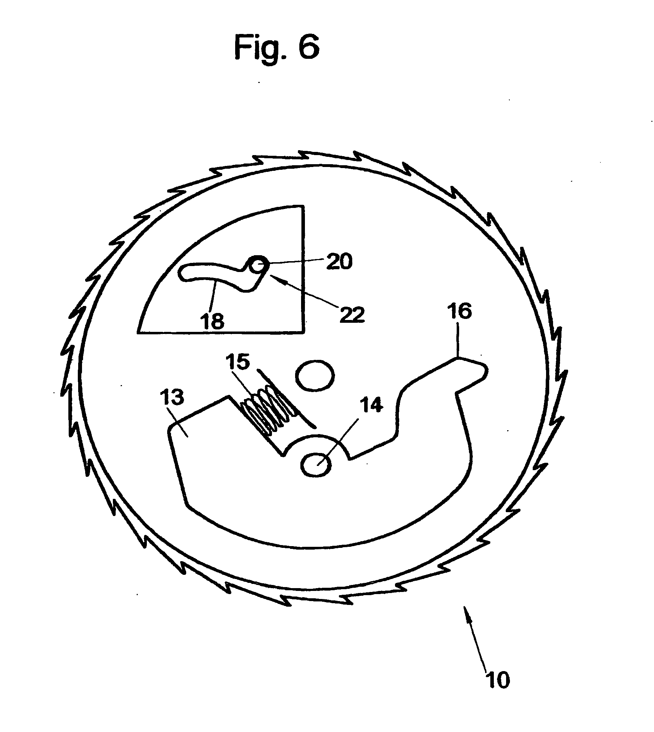

Figur 4,5 und 6 schematisch eine Draufsicht auf die in Figur 3 gezeigten Teile in verschiedenen Zuständen.
Figur 7 und 8 schematisch Teile einer gattungsgemäßen Gurtvorrichtung; und
Figur 9 schematisch Teile einer gattungsgemäßen Gurtvorrichtung.

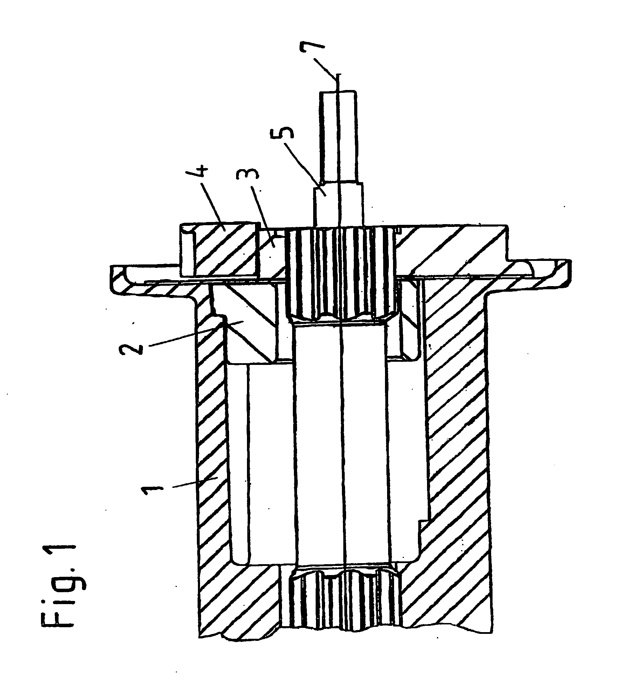

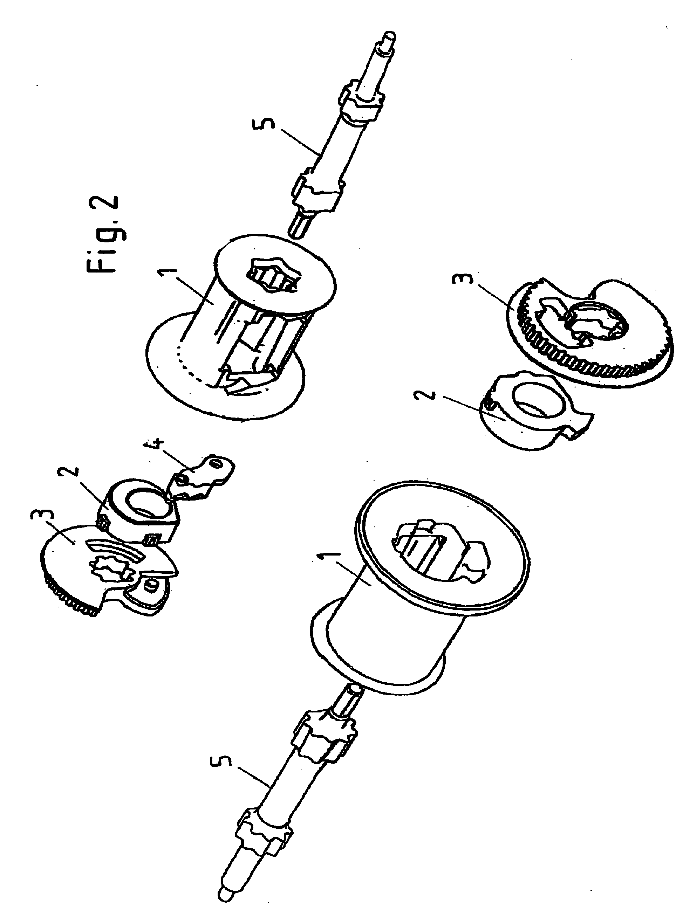

Figur 1 zeigt schematisch den Querschnitt eines Kraftbegrenzers für ein Gurtsystem. Figur 2 zeigt die Einzelteile des Begrenzers in perspektivischer Ansicht. Der Kraftbegrenzer umfasst eine drehbare Spindel 1 mit einem Spindellager 2, auf der ein nicht gezeigter Haltegurt auf- und abrollbar ist. An dem einen entlang ihrer Drehachse liegenden Ende der Spindel 1 ist ein relativ zur Spindel 1 drehbarer Flansch 3 angeordnet. Ausserdem ist eine Sperrklinke 4 zur Arretierung des Flansches gegenüber einem Gurtrahmen vorgesehen, beispielsweise bei einem ruckartigen Ausziehen des Gurtes.

Weiterhin ist ein Torsions- oder Drehstab 5 vorgesehen, der an beiden Enden einen Zahnkranz aufweist, mittels derer der Drehstab 5 in entsprechenden Aussparungen der Spindel 1 bzw. des Flansches 3 verdrehsicher verankert ist. Der Drehstab 5 koppelt die Spindel 1 und den Flansch 3 miteinander, so dass im Ruhezustand des Begrenzers (d.h. in Abwesenheit eines Unfalls) die Spindel 1 und der Flansch 3 gemeinsam um eine Drehachse 7 rotieren können, um den Gurt auf die Spindel 1 auf- oder von dieser abzurollen.

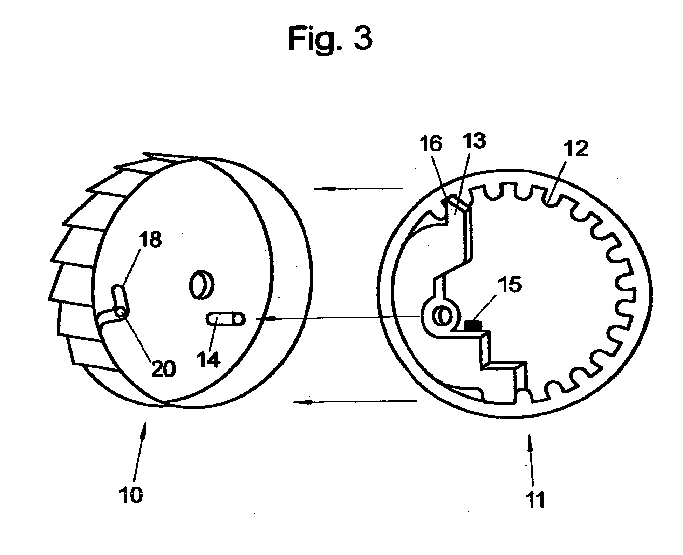

Figur 3 zeigt schematisch eine perspektivische Ansicht eines Sperrrades 10 und eines Radkranzes 11 einer Gurtvorrichtung nach einer ersten Ausgestaltung der Erfindung. Wie durch die Pfeile angedeutet wird der Radkranz 11 auf das Sperrrad 10 aufgesetzt. Alternativ kann das Sperrrad 10 auch auf den Radkranz 11 aufgesetzt sein.

Der Radkranz 11 ist gegenüber dem Gurtrahmen verriegelt, während das Sperrrad 10 gegenüber dem Gurtrahmen drehbar ist.

Die innere Umfangsfläche des Radkranzes 11 ist mit Zähnen 12 versehen, mit welchen eine zweite Sperrklinke 13 verrastet, wenn beispielsweise der Gurt ruckartig ausgezogen wird. Dazu ist die Sperrklinke 13 um eine auf der Grundfläche des Sperrrades 10 angeordnete Achse 14 herum drehbar gelagert. Die Achse 14 liegt außerhalb des Mittelpunktes der kreisförmigen Grundfläche des Sperrrades 10. Bei einem ruckartigen Auszug des Gurtes dreht sich die Sperrklinke 13 entgegen der Federkraft einer Feder 15 um die Achse 14 herum, so dass die Spitze 16 der Sperrklinke 13 mit den Zähnen 12 des Radkranzes 11 verrastet.

Das Sperrrad 10 ist mit dem Flansch 3 über eine nicht gezeigte Zugfeder verbunden. Im Normalbetrieb dreht sich das Sperrrad 10 mit der selben Geschwindigkeit wie der Flansch 3. Die Drehkraft wird dabei durch die Zugfeder übertragen. Wird der Gurt ruckartig ausgezogen, so verdreht sich die zweite Sperrklinke 13 um die Achse 14 herum und verrastet mit den Zähnen 12 des Radkranzes 11, wie oben beschrieben. Das mit dem Radkranz 11 verbundene Sperrrad 10 ist somit gegenüber dem Gurtrahmen verriegelt. Der Flansch 3 mit der ersten Sperrklinke 4 dreht sich nun entgegen der Federkraft der Zugfeder zusammen mit der Spindel 1 weiter.

Die erste Sperrklinke ist mittels eines Führungsstiftes 20 in einer Führungskulisse 18 in dem Sperrrad 10 geführt. Diese Führung bewirkt nichts, solange sich das Sperrrad 10 zusammen mit dem dem Flansch 3 mitdreht. Wird allerdings das Sperrrad 10 wie beschrieben gegenüber dem Gurtrahmen verriegelt, so dreht sich der Flansch 3 zusammen mit der ersten Sperrklinke 4 gegenüber dem Sperrrad 10 weiter. Die erste Sperrklinke 4 dreht sich folglich relativ zu dem Sperrrad 10, wobei die Ausrichtung der ersten Sperrklinke 4 während dieser relativen Drehung nun durch die Führungskulisse 18 bestimmt wird. Dies führt dazu, dass die erste Sperrklinke 4 mit dem Rahmen der Gurtvorrichtung in Eingriff gebracht wird und somit eine weitere Roatation des Flansches 3 sowie der damit verbundenen Spindel 1 blockiert. Die Gurtsperre ist somit aktiv.

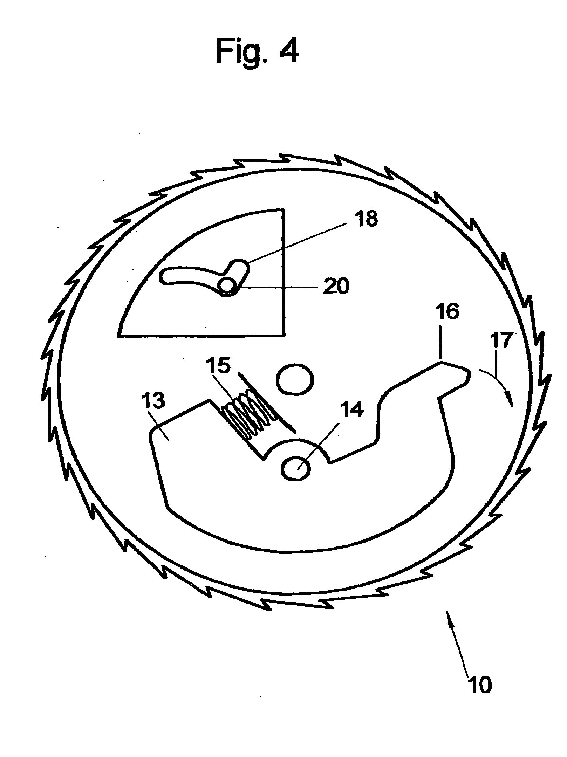

Figur 4 zeigt schematisch eine Frontalansicht des Sperrrades 10 mit auf die Achse 14 aufgesetzter Sperrklinke 13. Durch einen Pfeil 17 ist hier nochmals angedeutet, wie sich die Spitze 16 der Sperrklinke 13 nach außen bewegt, wenn ein durch das Verdrehen der Gurtrolle verursachtes Drehmoment auf die Sperrklinke 13 einwirkt, das größer ist als das durch die Rückhaltekraft der Feder 15 erzeugte Drehmoment.

In Figur 4 ist außerdem die Führungskulisse 18 deutlicher zu sehen. Innerhalb der Führungskulisse ist ein Führungsstift 20 geführt, der mit der ersten Sperrklinke 4 verbunden ist. Figur 4 zeigt den Führungsstift 20 in seiner Ruheposition. Die erste Sperrklinke 4 und damit der mit der ersten Sperrklinke 4 verbundene Führungsstift 20 werden durch ein nicht gezeigtes Federelement in Ruhestellung gehalten.

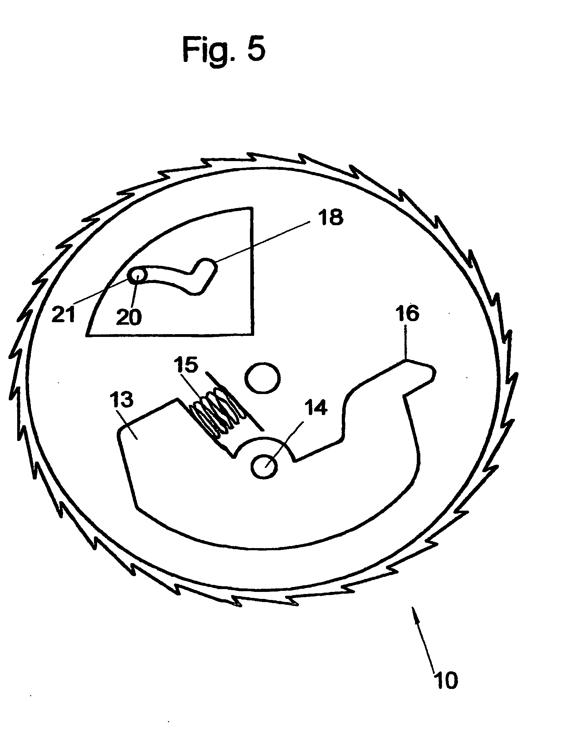

In Figur 5 zeigt ebenfalls schematisch eine Frontalansicht des Sperrrades 10, wobei hier der Führungsstift 20 an einem radial außen liegenden Anschlag 21 der Führungskulisse 18 anliegt. Das Verschieben des Führungsstiftes 20 entlang der Kulisse 18 wird bewirkt durch Blockieren des Sperrrades 10 relativ zum Flansch 3, wie oben beschrieben. Durch die relative Verdrehung des Flansches 3 zusammen mit der ersten Sperrklinke 4 wird der mit der ersten Sperrklinke 4 verbundene Führungsstift 20 entlang der Führungskulisse 18 relativ zum Sperrrad 10 verschoben, bis die erste Sperrklinke 4 mit dem Rahmen der Gurtvorrichtung verrastet und die Gurtsperre aktiviert.

Bei einem Lösen der Gurtsperre und einem Aufrollen des Gurtes wird die erste Sperrklinke 4 und damit auch der Führungsstift 20 durch die auf die erste Sperrklinke 4 wirkende Federkraft des erwähnten Federelementes wieder in die in Figur 4 gezeigte Ausgangslage zurückbewegt.

Umgekehrt, bei einer schnellen Spindelbewegung in Aufrollrichtung (d.h. in den Figuren 3 bis 5 im Gegenuhrzeigersinn) bewegt sich der Führungsstift 20 aufgrund der auf diesen sowie auf die damit verbundene erste Sperrklinke 4 wirkenden Zentrifugalkräfte in einen Totgang 22 der Führungskulisse 18. Der Totgang 22 bewirkt, dass sich die erste Sperrklinke 4 während der Aufrollbewegung nicht in den Rahmen einsteuern kann.

Sobald die Spindel 1 wieder zur Ruhe gekommen ist, wird die Sperrklinke über das erwähnte Federelement in die Ausgangsposition bewegt, wodurch auch der Führungsstift 20 wieder die in Figur 4 gezeigte Ruhestellung einnimmt.

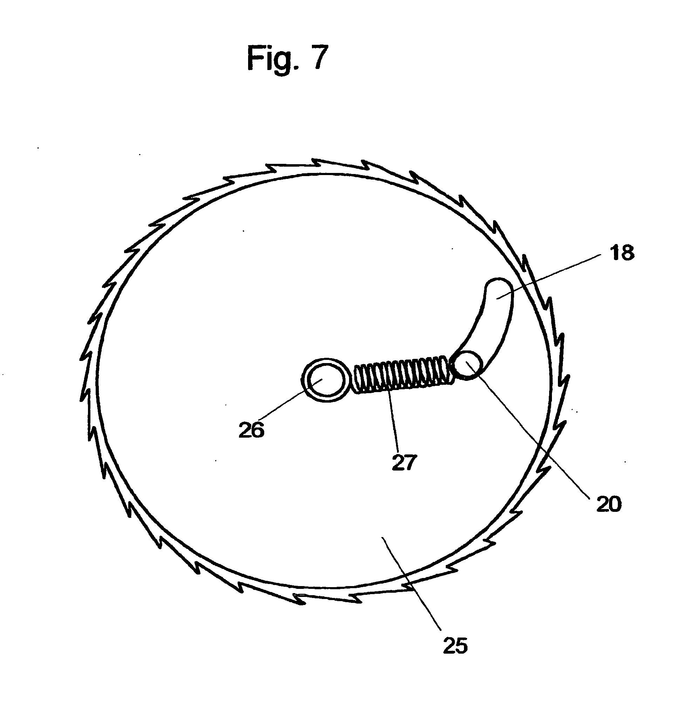

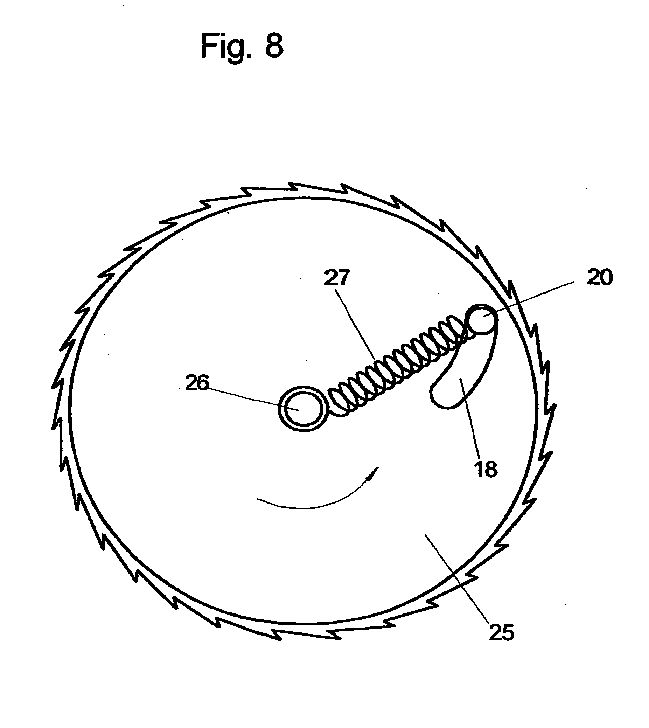

Die Figuren 7 und 8 zeigen jeweils einen Teil einer gattungsgemäßen Gurtvorrichtung. In dieser Ausgestaltung ist anstatt dem Sperrrad 10 und dem Radkranz 11 eine Trägheitsmasse 25 in Form einer Scheibe vorgesehen, die auf der Spindelachse 26 drehbar gelagert ist und durch ein vorgespanntes Federelement 27 indirekt in ihrer Ruhelage gehalten wird. Das Federelement ist einerseits mit der Spindelachse 26 und andererseits mit dem Führungsstift 20 gekoppelt.

Der Führungsstift 20 ist ebenso wie in der ersten Ausgestaltung mit der ersten Sperrklinke 4 gekoppelt und in einer Führungskulisse 18 in der Trägheitsmasse 25 geführt.

Das Federelement 27 ist so ausgelegt, dass dessen Federkraft bis zu einer definierten Winkelbeschleunigung die erste Sperrklinke 4 und die Trägheitsmasse 25 in der Ruhelage hält. Beim Überschreiten der Beschleunigungsschwelle tritt eine Relativbewegung zwischen der Spindel 1 und der Trägheitsmasse 25 auf. Dadurch wird der Führungsstift 20 in der Führungskulisse 18 verschoben und die erste Sperrklinke 4 in den Gurtrahemen eingesteuert.

Diese Ausgestaltung hat den Vorteil, dass die Anzahl der benötigten Einzelteile und damit die Kosten reduziert werden. Außerdem ergeben sich kurze Einsteuerwege und -zeiten bis zur Verriegelung der Spindel 1. Darüber hinaus ist die Geräuschentwicklung der ersten Sperrklinke 4 verringert.

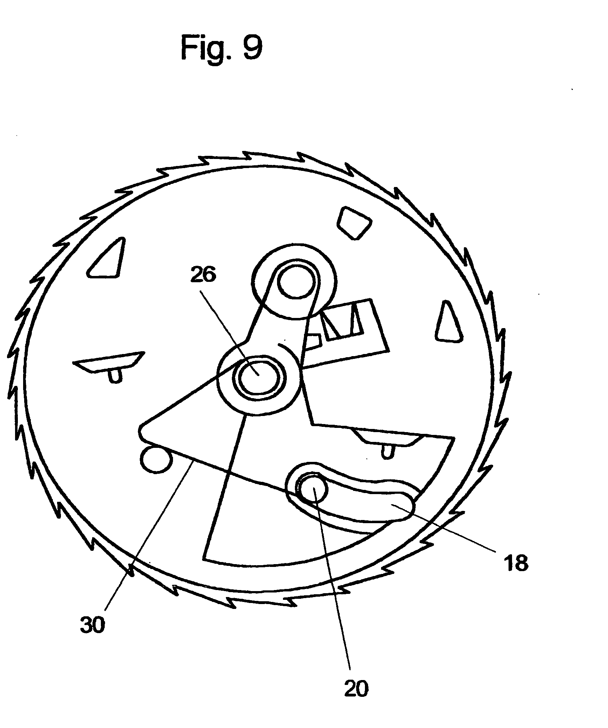

Figur 9 zeigt eine weitere gattungsgemäße Gurtvorrichtung. Dabei wird der Führungsstift 20 mittels einer Bügelfeder 30 in der gezeigten Ruheposition innerhalb der Führungskulisse 18 gehalten. Die Bügelfeder 30 verhindert eine freie Bewegung des Führungsstiftes und damit der ersten Sperrklinke 4, so dass damit neben einer ungewollten Verriegelung der Spindel 1 auch ein ungewolltes Klappern der Sperrklinke 4 oder des Führungsstiftes 20 verhindert wird.

Anzumerken ist, dass die Erfindung nicht auf die beschriebenen Ausführungsbeispiele beschränkt ist, sondern Modifikationen im Rahmen des durch die Ansprüche festgelegten Schutzbereiches umfasst.

### Liste der Bezugszeichen

- 1: Spindel
- 2: Spindellager
- 3: Flansch
- 4: erste Sperrklinke
- 5: Drehstab
- 7: Drehachse
- 10: Sperrrad
- 11: Radkranz
- 12: Zähne
- 13: zweite Sperrklinke
- 14: Achse
- 15: Feder
- 16: Spitze der zweiten Sperrklinke
- 17: Drehrichtung der zweiten Sperrklinke
- 18: Führungskulisse
- 20: Führungsstift
- 21: Anschlag
- 22: Totgang
- 25: Trägheitsmasse
- 26: Spindelachse
- 27: Spiralfeder
- 30: Bügelfeder

## Patentansprüche

1. Gurtvorrichtung für ein Fahrzeug, mit:
- einem Sicherheitsgurt;
- einer am Fahrzeugchassis drehbar befestigten Gurtrolle (1) zum Auf- und Abrollen des Sicherheitsgurtes;
- einer ersten Sperrvorrichtung (4) zur Verriegelung der Gurtrolle (1) gegenüber einem Gurtrahmen; und
- einem an die Sperrvorrichtung gekoppelten Führungsstift (20), der innerhalb einer Führungskulisse (18) zwischen einer ersten Position und einer davon getrennt angeordneten Ruheposition beweglich geführt ist,
- wobei in der ersten Position (21) die Gurtrolle (1) gegenüber dem Gurtrahmen verriegelt ist
- wobei in der Ruheposition ein Auf- und Abrollen des Sicherheitsgurtes möglich ist und
- wobei der Führungsstift (20) bei einem ruckartigem Abrollen des Sicherheitsgurtes von der Ruheposition in die erste Position (21) bewegt wird
**dadurch gekennzeichnet,**
- **dass** die Führungskulisse (18) für den Führungsstift (20) zusätzlich eine von der Ruheposition beabstandete zweite Position (22) aufweist, die von der ersten Position (21) durch die Ruheposition getrennt ist und in der eine Verriegelung der Gurtrolle gegenüber dem Gurtrahmen generell verhindert wird, und
- **dass** der Führungsstift (20) bei einem Aufrollen des Sicherheitsgurtes von der Ruheposition in die zweite Position (22) bewegt wird.

2. Gurtvorrichtung nach Anspruch 1, wobei die Bewegung des Führungsstifts (20) bei einem Aufrollen des Sicherheitsgurtes von der Ruheposition in die zweite Position (22) trägheitsbedingt erfolgt.

3. Gurtvorrichtung nach Anspruch 1 oder 2, wobei eine Bewegung des Führungsstiftes (20) von der Ruheposition in die zweite Position (22) durch die bei der Drehung der Gurtrolle (1) entstehenden Trägheitsmomente der ersten Sperrvorrichtung (4) bewirkt wird.

4. Gurtvorrichtung nach einem der vorhergehenden Ansprüche, wobei die Führungskulisse (18) einen Totgang (22) aufweist, in welchem der Führungsstift besagte zweite Position einnimmt.

5. Gurtvorrichtung nach einem der vorhergehenden Ansprüche, wobei die Führungskulisse (18) senkrecht zur Drehachse der Gurtrolle verläuft.

6. Gurtvorrichtung nach einem der vorhergehenden Ansprüche, wobei die Führungskulisse (18) aus einem längeren und einem dazu im wesentlichen senkrechten kürzeren Kulissenabschnitt besteht, und wobei die erste Position sich am der Verbindungsstelle der beiden Abschnitte entgegengesetzten Ende des längeren Abschnittes, und die zweite Position sich am der Verbindungsstelle der beiden Abschnitte entgegengesetzten Ende des kürzeren Abschnittes befindet.

7. Gurtvorrichtung nach einem der vorhergehenden Ansprüche, mit einem Federelement, das die erste Sperrvorrichtung (4) und den angekoppelten Führungsstift (20) in der Ruheposition hält.

8. Gurtvorrichtung nach Anspruch 7, wobei das Federelement durch eine Spiralfeder gebildet ist.

9. Gurtvorrichtung nach Anspruch 7, wobei das Federelement durch eine Bügelfeder gebildet ist.

10. Gurtvorrichtung nach einem der vorhergehenden Ansprüche, wobei die erste Sperrvorrichtung eine Sperrklinke (4) aufweist, die zur Verriegelung der Gurtrolle (1) mit einem Rahmen der Gurtvorrichtung verrastbar ist.

11. Gurtvorrichtung nach Anspruch 1, mit:
einem mit der Gurtrolle (1) und der ersten Sperrvorrichtung (4) verbundenen Flansch (3);
einem drehbar am Fahrzeugchassis befestigten Sperrrad (10); und
einer an das Sperrrad gekoppelten zweiten Sperrvorrichtung (13) zur Verriegelung des Sperrrades (11) bei einem ruckartigen Abrollen des Sicherheitsgurtes;
wobei die Führungskulisse (18) in dem Sperrrad (10) vorgesehen ist, und der Führungsstift (20) bei Verriegelung des Sperrrades (10) durch weitere Drehung des Flansches (3) und der ersten Sperrvorrichtung (4) entlang der Führungskulisse (18) in Richtung der ersten Position (21) bewegt wird, wodurch eine Verriegelung der Gurtrolle (1) durch die erste Sperrvorrichtung (4) ausgelöst wird, und wobei der Führungsstift (20) durch ruckartiges Aufrollen des Sicherheitsgurtes in Richtung der zweiten Position (22) bewegt wird, wodurch eine Verriegelung der Gurtrolle durch die erste Sperrvorrichtung (4) verhindert wird.

12. Gurtvorrichtung nach Anspruch 11, wobei die zweite Sperrvorrichtung durch eine Sperrklinke (13) gebildet ist, die bei Überschreiten einer vorbestimmten Winkelbeschleunigung der Gurtrolle (1) in Gurtabrollrichtung in eine Verzahnung eines Radkranzes (11) eingreift, wodurch das Sperrrad (10) gegenüber der Gurtrolle (1) verriegelt wird, und bei weiterer Rotation der Gurtrolle gegenüber dem Sperrrad (10) der Führungsstift (20) innerhalb der Führungskulisse (18) in die erste Position (21) bewegt wird.

## Claims

1. Seat belt device for a vehicle, having:
- a seat belt;
- a seat belt roller (1) rotatably fixed to the vehicle chassis for reeling and unreeling of the seat belt;
- a first locking device (4) for locking the seat belt roller (1) in relation to a belt frame; and
- a guide pin (20) which is coupled to the locking device and which is moveably guided inside a guide link (18) between a first position and a rest position arranged separately therefrom,
- the seat belt roller (1) being locked in relation to the belt frame in the first position (21),
- it being possible for the seat belt to be reeled and unreeled in the rest position, and
- the guide pin (20) being moved from the rest position into the first position in the event of the seat belt being unreeled in a jerky way,
**characterized**
- **in that** the guide link (18) for the guide pin (20) additionally has a second position (22), which is spaced apart from the rest position, is separated from the first position (21) by the rest position and in which locking of the seat belt roller with respect to the belt frame is generally prevented, and
- **in that** the guide pin (20) is moved from the rest position into the second position (22) when the seat belt is being reeled in.

2. Seat belt device according to Claim 1, wherein the movement of the guide pin (20) from the rest position into the second position (22) when the seat belt is being reeled in takes place under inertial conditions.

3. Seat belt device according to Claim 1 or 2, **characterized in that** a movement of the guide pin (20) from the rest position into the second position (22) is brought about by the moments of inertia of the first locking device (4) occurring during the rotation of the seat belt roller (1).

4. Seat belt device according to any one of the preceding claims, **characterized in that** the guide link (18) has a free travel (22), in which the guide pin assumes the said second position.

5. Seat belt device according to any one of the preceding claims, **characterized in that** the guide link (18) runs perpendicular to the axis of rotation of the seat belt roller.

6. Seat belt device according to any one of the preceding claims, **characterized in that** the guide link (18) comprises a longer link section and a shorter link section essentially perpendicular thereto, and that the first position is situated at the end of the longer section opposite the junction of the two sections, and the second position at the end of the shorter section opposite the junction of the two sections.

7. Seat belt device according to any one of the preceding claims, having a spring element, which holds the first locking device (4) and the coupled guide pin (20) in the rest position.

8. Seat belt device according to Claim 7, **characterized in that** the spring element takes the form of a coil spring.

9. Seat belt device according to Claim 7, **characterized in that** the spring element takes the form of a spring clip.

10. Seat belt device according to any one of the preceding claims, **characterized in that** the first locking device has a retaining pawl (4), which is capable of engaging with a frame of the seat belt device in order to lock the seat belt roller (1).

11. Seat belt device according to Claim 1, having:
a flange (3) connected to the seat belt roller (1) and
the first locking device (4);
a ratchet wheel (10) rotatably fixed to the vehicle chassis;
and a second locking device (13), coupled to the ratchet wheel, for locking the ratchet wheel (11) in the event of a jerky unreeling of the seat belt;
**characterized in that** the guide link (18) is provided in the ratchet wheel (10), and the guide pin (20), on locking of the ratchet wheel (10), is moved along the guide link (18) towards the first position (21) by further rotation of the flange (3) and the first locking device (4), thereby causing the first locking device (4) to lock the seat belt roller (1), and that the guide pin (20) is moved towards the second position (22) by jerky reeling in of the seat belt, thereby preventing the first locking device (4) from locking the seat belt roller.

12. Seat belt device according to Claim 11, **characterized in that** the second locking device takes the form of a retaining pawl (13), which engages in a toothing of a wheel rim (11) should a predetermined angular acceleration of the seat belt roller (1) in the belt unreeling direction be exceeded, so that the ratchet wheel (10) is locked in relation to the seat belt roller (1), and the guide pin (20) inside the guide link (18) is moved into the first position (21) in the event of further rotation of the seat belt roller in relation to the ratchet wheel (10).

## Revendications

1. Dispositif de ceinture de sécurité pour un véhicule, comprenant
- une ceinture de sécurité ;
- un enrouleur de ceinture (1) fixé avec capacité de rotation sur le châssis de véhicule pour enrouler et dérouler la ceinture de sécurité ;
- un premier dispositif de blocage (4) servant à verrouiller l'enrouleur de ceinture (1) par rapport à un cadre de ceinture ; et
- une goupille de guidage (20) accouplée au dispositif de blocage, qui est guidée de façon mobile à l'intérieur d'une coulisse de guidage (18) entre une première position et une position de repos disposée séparément de celle-ci,
- dans lequel l'enrouleur de ceinture (1) est verrouillé par rapport au cadre de ceinture dans la première position (21),
- dans lequel un enroulement et un déroulement de la ceinture de sécurité est possible dans la position de repos et
- dans lequel la goupille de guidage (20) est déplacée de la position de repos à la première position (21) lors d'un déroulement par à-coups de la ceinture de sécurité,
**caractérisé en ce que**
- la coulisse de guidage (18) pour la goupille de guidage (20) présente en supplément une seconde position (22) distante de la position de repos, qui est séparée de la première position (21) par la position de repos et dans laquelle un verrouillage de l'enrouleur de ceinture par rapport au cadre de ceinture est empêché de manière générale et
- la goupille de guidage (20) est déplacée de la position de repos à la seconde position (22) lors d'un enroulement de la ceinture de sécurité.

2. Dispositif de ceinture selon la revendication 1, dans lequel le déplacement de la goupille de guidage (20) de la position de repos à la seconde position (22) lors d'un enroulement de la ceinture de sécurité a lieu par inertie.

3. Dispositif de ceinture selon la revendication 1 ou 2, dans lequel un déplacement de la goupille de guidage (20) de la position de repos à la seconde position (22) est provoqué par les moments d'inertie du premier dispositif de blocage (4) engendrés lors de la rotation de l'enrouleur de ceinture (1).

4. Dispositif de ceinture selon l'une quelconque des revendications précédentes, dans lequel la coulisse de guidage (18) présente une course morte (22) dans laquelle la goupille de guidage occupe ladite seconde position.

5. Dispositif de ceinture selon l'une quelconque des revendications précédentes, dans lequel la coulisse de guidage (18) s'étend perpendiculairement à l'axe de rotation de l'enrouleur de ceinture.

6. Dispositif de ceinture selon l'une quelconque des revendications précédentes, dans lequel la coulisse de guidage (18) est composée d'un segment de coulisse plus long et d'un segment de coulisse plus court essentiellement perpendiculaire au segment long, et dans lequel la première position se trouve à l'extrémité du segment le plus long opposée au point de jonction des deux segments et la seconde position se trouve à l'extrémité du segment le plus court opposée au point de jonction des deux segments.

7. Dispositif de ceinture selon l'une quelconque des revendications précédentes, comportant un élément de ressort qui maintient dans la position de repos le premier dispositif de blocage (4) et la goupille de guidage (20) accouplée.

8. Dispositif de ceinture selon la revendication 7, dans lequel l'élément de ressort est formé par un ressort à boudin.

9. Dispositif de ceinture selon la revendication 7, dans lequel l'élément de ressort est formé par un ressort en étrier.

10. Dispositif de ceinture selon l'une quelconque des revendications précédentes,
dans lequel le premier dispositif de blocage présente un cliquet d'arrêt (4) qui peut être encliqueté avec un cadre du dispositif de ceinture pour verrouiller l'enrouleur de ceinture (1).

11. Dispositif de ceinture selon la revendication 1, comprenant
une bride (3) reliée à l'enrouleur de ceinture (1) et au premier dispositif de blocage (4) ;
une roue à rochet (10) fixée avec capacité de rotation sur le châssis du véhicule ; et
un second dispositif de blocage (13) accouplé à la roue à rochet pour verrouiller la roue à rochet (11) lors d'un déroulement par à-coups de la ceinture de sécurité ;
dans lequel la coulisse de guidage (18) est prévue dans la roue à rochet (10) et la goupille de guidage (20) est déplacée le long de la coulisse de guidage (18) en direction de la première position (21) lors du verrouillage de la roue à rochet (10) par la poursuite de la rotation de la bride (3) et du premier dispositif de blocage (4), ce qui déclenche un verrouillage de l'enrouleur de ceinture (1) par le premier dispositif de blocage (4), et dans lequel la goupille de guidage (20) est déplacée par enroulement par à-coups de la ceinture de sécurité en direction de la seconde position (22), ce qui empêche un verrouillage de l'enrouleur de ceinture par le premier dispositif de blocage (4).

12. Dispositif de ceinture selon la revendication 11, dans lequel le second dispositif de blocage est formé par une cliquet d'arrêt (13) qui s'engage, lors du dépassement d'une accélération angulaire prédéterminée de l'enrouleur de ceinture (1) dans la direction de déroulement de la ceinture, dans une denture d'une jante de roue (11), ce qui verrouille la roue à rochet (10) par rapport à l'enrouleur de ceinture (1) et, lors de la poursuite de la rotation de l'enrouleur de ceinture par rapport à la roue à rochet (10), la goupille de guidage (20) est déplacée à l'intérieur de la coulisse de guidage (18) jusqu'à la première position (21).
